# FASCICULE DE BREVET EUROPEEN

(11) **EP 0 471 623 B1**
(45) Date de publication et mention de la délivrance du brevet: **08.12.1993**
(21) Numéro de dépôt: 91402245.4
(22) Date de dépôt: 14.08.1991
(51) Int. Cl.: F02C 9/28, F02C 9/46

(54) **Dispositif compensateur de température devant la turbine d'une turbomachine d'aviation**
Flugtriebwerkregelsystem ansprechend auf die Turbineneintrittstemperatur
Aviation turboengine control responsive to temperature before turbine

(30) Priorité: 16.08.1990 FR 9010375
(43) Date de publication de la demande: 19.02.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Maulat, Jean-Pierre, F-94100 Saint Maur (FR)
(74) Mandataire: Moinat, François

(56) Documents cités:
- FR-A- 2 173 143
- FR-A- 2 406 078
- US-A- 3 667 218
- US-A- 4 314 445

## Description

La présente invention concerne la régulation d'une turbomachine d'aviation.

Elle concerne plus précisément un dispositif compensateur de température devant la turbine à haute pression d'une turbomachine d'aviation à deux corps, destiné à augmenter automatiquement et temporairement la poussée de ladite turbomachine dans de mauvaises conditions de vol, notamment à température ambiante élevée et à moteur froid, ladite turbomachine étant régulée à température de consigne constante derrière la turbine à basse pression par un système de régulation.

Dans une turbomachine régulée à température derrière la turbine constante, la poussée est normalement maximale lorsque le pilote met le système de commande de la turbomachine au plein gaz. Or on constate un manque de poussée lorsque la turbomachine est froide et/ou lorsque la température ambiante est élevée. Ceci se produit en particulier au décollage et dans les phases d'approche, c'est-à-dire au moment où le pilote a besoin de la poussée maximale. Ce manque de poussée est dû au fait qu'il y a une température insuffisante devant la turbine lors de la mise en puissance de la turbomachine et ce manque de température devant la turbine est d'autant plus grand que la température ambiante est élevée ou que le moteur est thermiquement froid.

On connaît un dispositif de régulation de turbine à gaz qui permet de rectifier la valeur de la température de consigne lorsque la température ambiante est élevée. FR-A-2 173 143 décrit une telle installation de régulation qui comporte un générateur de fonction 37, représenté en détail sur la figure 3 de ce document, qui fournit une loi de correction fonction du rapport de la vitesse de rotation de la turbine à gaz à la racine carrée de la température ambiante. L'inconvénient de cette structure est qu'elle ne permet pas de tenir compte de l'état thermique de la machine lors de sa montée en puissance, ce qui est particulièrement important pour un aéronef lors de la phase de décollage lorsque la turbomachine est encore froide.

Le but de la présente invention est de proposer un dispositif compensateur du type mentionné qui soit intégré dans le système de régulation de la turbomachine et qui permette d'améliorer automatiquement la poussée de la turbomachine lorsque celle-ci est froide et/ou lorsque la température ambiante est élevée.

Le but est atteint par le fait que le dispositif de l'invention est caractérisé en ce qu'il comporte :
un générateur de fonction recevant des indications sur le régime de rotation de la turbine basse pression et sur la température effective à la sortie de ladite turbine et fournissant une valeur de correction de température de consigne en fonction desdites indications et selon une loi-programme déterminée,
un additionneur recevant une indication sur la valeur de la température de consigne donnée et susceptible d'être relié temporairement audit générateur de fonction pour recevoir ladite valeur de correction, ledit additionneur fournissant au système de régulation la valeur corrigée de la température de consigne à prendre à compte, et
des moyens permettant de relier temporairement ledit générateur de fonction audit additionneur en fonction de conditions d'utilisation de ladite turbomachine.

Lesdits moyens permettant de relier temporairement ledit générateur de fonction audit additionneur comportent :
un interrupteur permettant de relier ledit générateur de fonction audit additionneur,
un temporisateur permettant d'actionner ledit interrupteur pendant un temps prédéterminé,
un premier indicateur de régime de rotation du corps haute pression NHP relié audit temporisateur par l'intermédiaire d'une porte ET et fournissant un signal lorsque ledit régime de rotation est supérieur à un premier pourcentage déterminé de son régime maximum, et
un deuxième indicateur de régime de rotation du corps haute pression relié à ladite porte ET par l'intermédiaire d'une mémoire et fournissant à ladite mémoire un signal d'activation lorsque ledit régime de rotation est inférieur à un deuxième pourcentage déterminé de son régime de rotation, ledit deuxième pourcentage étant inférieur audit premier pourcentage,
ladite mémoire étant de plus reliée audit temporisateur pour que celui-ci puisse la désactiver lorsqu'il est enclenché, et en ce que ladite porte ET fournit au temporisateur un signal d'enclenchement lorsqu'il reçoit un signal du premier indicateur de régime et lorsque, en même temps, la mémoire est activée.

De préférence, le premier indicateur de régime fournit un signal lorsque le régime de rotation du corps haute pression est supérieur à 90% de son régime maximum, ce qui se produit lorsque le pilote affiche le système de commande de la turbomachine au plein gaz.

Avantageusement, le deuxième indicateur de régime fournit un signal d'activation de la mémoire lorsque le régime de rotation du corps haute pression est inférieur à 80% de son régime maximum. Ce bas régime est rarement obtenu en régie de croisière de l'aéronef. On ne l'obtient en général que lors des phases d'approche d'un aérodrome.

Le dispositif proposé permet d'augmenter, de façon automatique, la poussée de la turbomachine, dans les mauvaises conditions de vol, car il tient compte des paramètres mécaniques et thermiques de la turbomachine. La loi programme du générateur de fonction est établie de telle manière que le générateur de fonction fournisse une valeur de correction qui est comprise entre une valeur maximale correspondant aux conditions de vol les plus défavorables de manière à éviter une surchauffe de la turbomachine, et une valeur nulle correspondant aux conditions de fonctionnement optimales de la turbine à haut régime.

Au décollage, le système sera actif dès la première accélération de la turbomachine, le régime de rotation du corps haute pression de la turbomachine étant alors égal ou supérieur à 90% du régime maximum. Le dispositif ne sera ensuite qu'exceptionnellement réactivé en vol car le régime de rotation du corps haute pression descend rarement au-dessous du seuil de 80% qui a été fixé pour son réarmement.

Lors de la phase d'approche ou lors de l'atterrissage, le dispositif sera de nouveau opérationnel dès que le régime de rotation du corps haute pression repasse le seuil de 80% du régime maximum.

Lors des exercices de "touch and go", les conditions de fonctionnement du dispositif sont identiques aux conditions de l'approche et de l'atterrissage.

D'autres avantages et caractéristiques de l'invention ressortiront à la lecture de la description suivante faite à titre d'exemple et en référence au dessin annexé dans lequel :
- la figure 1 montre les courbes de la température devant la turbine en fonction de la durée de mise en température de la turbomachine pour différentes températures ambiantes dans une turbomachine régulée à température derrière la turbine constante,
- la figure 2 montre les courbes de la température devant la turbine, pour une température ambiante donnée et pour différentes températures de consigne derrière la turbine,
- la figure 3 montre la courbe de la loi programme donnant la valeur de correction de la température de consigne en fonction du régime de rotation de la turbine basse pression NBP et de la température effective TE7 derrière ladite turbine, et
- la figure 4 représente le schéma du dispositif de l'invention.

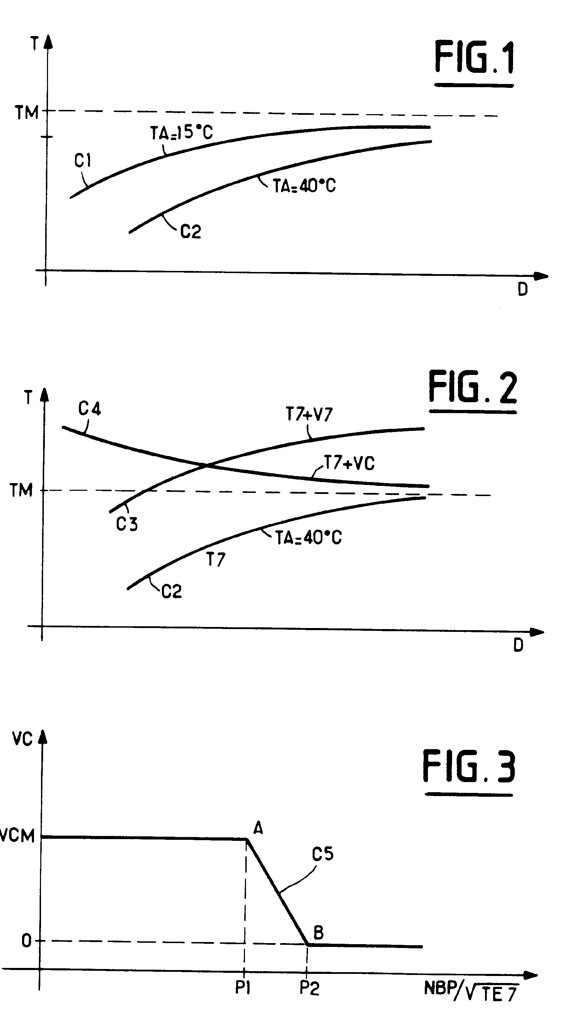

Lors de la montée en puissance d'une turbomachine d'aviation à deux corps régulée à température de consigne T7 derrière la turbine basse pression constante, il faut un certain temps pour que la température T devant les turbines soit stabilisée à sa valeur maximale TM. La figure 1 montre les courbes C1 et C2 de cette température T en fonction de la durée D qui s'est écoulée depuis la mise en température de la turbomachine. La courbe C1 correspond à une température ambiante TA de 15°C et la courbe C2 correspond à une température ambiante TA de 40°C. Ces courbes C1 et C2 montrent que le manque de température devant la turbine, c'est-à-dire l'écart entre TM et T, est d'autant plus grand que la température ambiante TA est élevée, et que ce manque de température diminue lorsque la durée D augmente. Ce manque de température entraîne un manque de poussée de la turbomachine lorsque la température ambiante TA est élevée et lorsque le moteur est froid. Cette situation défavorable se produit en particulier lors du décollage de l'avion et lors de l'approche ou atterrissage, autrement dit au moment où il est nécessaire de pouvoir obtenir la poussée maximum.

Le but de la présente invention est de proposer un dispositif automatique intégré dans le système de régulation de la turbomachine qui permette, sans action du pilote et sans appareil de commande spécial, d'augmenter la température T devant la turbine pendant une durée prédéterminée, et en fonction des conditions de vol, de manière à améliorer la poussée de la turbomachine pendant cette durée prédéterminée.

Le principe de l'invention consiste à augmenter temporairement la température de consigne T7 en fonction d'une loi programme préétablie et pendant cette durée prédéterminée.

Sur la figure 2 on a de nouveau représente la courbe C2 de température T devant la turbine en fonction de la durée D de mise en température pour une température ambiante TA égale à 40°C et pour une température de consigne T7 derrière la turbine donnée et constante. La courbe C3 représente la courbe de la température T devant la turbine que l'on obtient en augmentant la température de consigne T7 d'une valeur constante V7. On obtient alors une température T qui est nettement supérieure à la température maximum TM, ce qui peut entraîner une surchauffe dangeureuse de la turbomachine. La courbe C4 est obtenue en utilisant une loi programme qui permet d'augmenter la température de consigne T7 derrière la turbine d'une valeur de correction VC qui, d'une part, est limitée à une valeur de correction maximum VCM dans les conditions les plus défavorables pour éviter une surchauffe de la turbomachine, et qui, d'autre part, est fonction des paramètres cinématiques et thermiques des turbines et décroît au fur et à mesure que l'on se rapproche des valeurs optimales de ces paramètres à plein régime. Les paramètres choisis sont la vitesse de rotation de la turbine basse pression NBP et la température effective TE7 à la sortie de la turbine basse pression.

La figure 3 montre l'allure de la courbe C5 représentant la valeur de la correction VC en fonction d'un paramètre P proportionnel au régime de rotation NBP et inversement proportionnel à la racine carrée de la température effective TE7 à la sortie de la turbine basse pression. Cette courbe montre que, jusqu'à la valeur P1 du paramètre P, la valeur de la correction VC à appliquer est constante et égale à VCM. Ceci correspondant à une turbomachine froide. Ensuite la valeur de correction est décroissante entre les valeurs du paramètre P comprises entre P1 et P2. Enfin à partir de la valeur P2, qui correspond à un moteur chaud et aux conditions de fonctionnement idéales de la turbomachine, les températures étant stabilisées, la valeur de la correction VC est égale à 0.

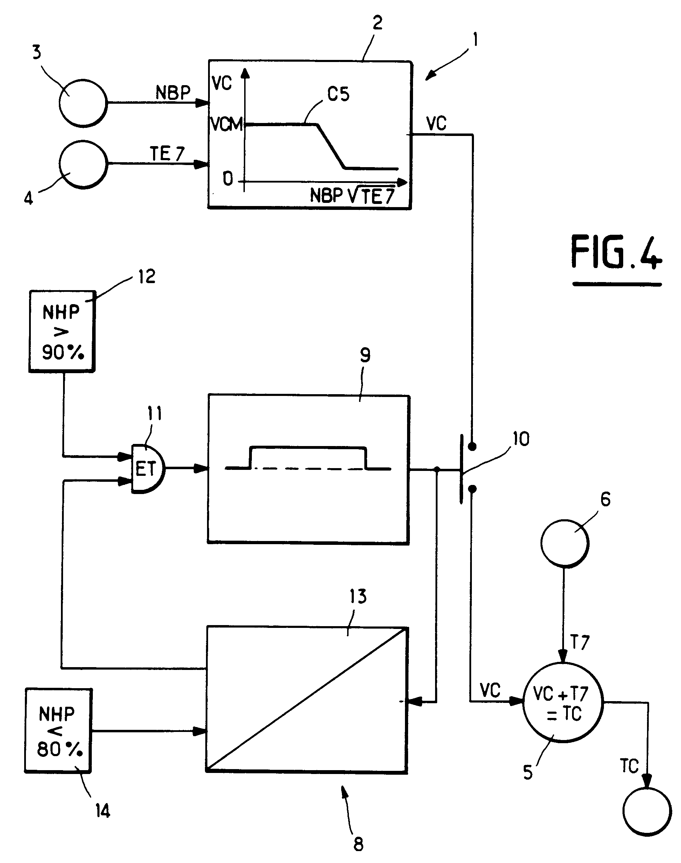

La figure 4 montre le schéma de principe du dispositif 1 de l'invention qui permet de compenser automatiquement la température à l'entrée de la turbine dans les mauvaises conditions de vol.

Ce dispositif 1 comporte essentiellement un générateur de fonction 2 qui reçoit des indications sur le régime de rotation NBP de la turbine basse pression et sur la température effective TE7 à la sortie de la turbine basse pression et qui fournit en sortie la valeur de correction de température VC fonction de la loi programme correspondant à la courbe C5 de la figure 3. Le régime de rotation NBP de la turbine basse pression est fourni par un mesureur de vitesse de rotation 3. La température à la sortie de la turbine basse pression est mesurée par un capteur de température 4. La valeur de correction obtenue VC est introduite, dans certaines conditions d'utilisation de la turbomachine explicitées plus loin, dans un additionneur 5 qui reçoit également en entrée une indication sur la valeur de la température de consigne normale T7 affichée dans le système de régulation de la turbomachine et fournie par un dispositif 6. L'additionneur 5 émet en sortie un signal correspondant à la valeur d'une température de consigne corrigée TC qui est prise en compte par le système de régulation de la turbomachine pour réguler celle-ci.

Le dispositif 1 comporte de plus des moyens 8 permettant d'appliquer la valeur de correction VC à l'additionneur 6 dans certaines conditions d'utilisation de l'avion, en particulier au décollage et dans les phases d'approche et d'atterrissage.

Ces moyens 8 comportent essentiellement une temporisateur 9 qui actionne un interrupteur 10 permettant de relier le générateur de fonction 2 et l'additionneur 6, pour que celui-ci reçoive, en entrée, la valeur de la correction VC issue du générateur de fonction 2, pendant une durée prédéterminée qui peut être par exemple de 150 secondes.

Le temporisateur 9 est déclenché par une porte ET 11. La porte ET 11 est reliée, d'une part, à un premier indicateur de régime 12, qui fournit un signal lorsque le régime de rotation du corps haute pression NHP est supérieur à 90% de son régime maximum, et, d'autre part, à une mémoire 13 qui fournit un signal lorsqu'elle est activée. La mémoire 13 est reliée à un deuxième indicateur de régime 14 qui active la mémoire 13 lorsque le régime de rotation du corps haute pression NHP est inférieure à 80%. La mémoire 13 est également reliée à la sortie du temporisateur 9 dans le but de désactiver la mémoire 13 dès le déclenchement du temporisateur 9.

Grâce à cette disposition, le dispositif 1 est opérant lorsque le régime de rotation du corps haute pression NHP est inférieur à 80% de son régime maximum et reste opérant jusqu'à ce que le temporisateur 9 soit déclenché. Le déclenchement ne se produit que si le régime de rotation du corps haute pression NHP est supérieur à 90% de son régime maximum. Le dispositif 1 est ainsi opérationnel dès la première montée en régime de la turbomachine, ce qui se produit au décollage de l'aéronef. En régime de croisière, le dispositif 1 est en général inopérant car le régime de rotation du corps haute pression NHP ne descend que très rarement en dessous de 80% de son régime maximum. Lors de la phase d'approche d'un aérodrome, le dispositif sera de nouveau opérant lorsque le régime de rotation du corps haute pression NHP descendra en dessous de 80% de son régime maximum et se mettra en action dès que le pilote remettra les gaz, le régime de rotation du corps haute pression NHP devenant alors supérieur à 90% de son régime maximum.

A noter que lorsque le temporisateur 9 n'est pas déclenché, la température de consigne corrigée TC fournie par l'additionneur 5 est égale à la température de consigne normale T7. De plus, si les conditions de vol sont favorables, c'est-à-dire si la température ambiante TO est faible, et le moteur chaud, la valeur de correction VC fournie par le générateur de fonction 2 est nulle.

## Revendications

1. Dispositif compensateur de température devant la turbine haute pression d'une turbomachine d'aviation à deux corps, destiné à augmenter automatiquement et temporairement la poussée de ladite turbomachine dans de mauvaises conditions de vol, notamment à température ambiante TA élevée et à moteur froid, ladite turbomachine étant régulée à température de consigne constante derrière la turbine à basse pression par un système de régulation, caractérisé en ce qu'il comporte :
un générateur de fonction (2) recevant des indications sur le régime de rotation NBP de la turbine basse pression et sur la température effective TE7 à la sortie de ladite turbine et fournissant une valeur de correction VC de température de consigne en fonction desdites indications et selon une loi programme déterminée,
un additionneur (5) recevant une indication sur la valeur de la température de consigne donnée T7 et susceptible d'être relié temporairement audit générateur de fonction (2) pour recevoir ladite valeur de correction VC, ledit additionneur (5) fournissant au système de régulation la valeur corrigée de la température de consigne TC à prendre à compte, et
des moyens (8) permettant de relier temporairement ledit générateur de fonction (2) audit additionneur (5) en fonction de conditions d'utilisation de ladite turbomachine.

2. Dispositif selon la revendication 1 caractérisé en ce que lesdits moyens (8) permettant de relier temporairement ledit générateur de fonction (2) audit additionneur (5) comportent :
un interrupteur (10) permettant de relier ledit générateur de fonction (2) audit additionneur (5),
un temporisateur (9) permettant d'actionner ledit interrupteur (10) pendant un temps prédéterminé,
un premier indicateur (12) de régime de rotation du corps haute pression NHP relié audit temporisateur (9) par l'intermédiaire d'une porte ET (11) et fournissant un signal lorsque ledit régime de rotation NHP est supérieur à un premier pourcentage déterminé de son régime maximum, et
un deuxième indicateur (14) de régime de rotation du corps haute pression NHP relié à ladite porte ET (11) par l'intermédiaire d'une mémoire (13) et fournissant à ladite mémoire (13) un signal d'activation lorsque ledit régime de rotation NHP est inférieur à un deuxième pourcentage déterminé de son régime de rotation, ledit deuxième pourcentage étant inférieur audit premier pourcentage,
ladite mémoire (13) étant de plus reliée audit temporisateur (9) pour que celui-ci puisse la désactiver lorsqu'il est enclenché, et en ce que ladite porte ET (11) fournit au temporisateur (9) un signal d'enclenchement lorsqu'il reçoit un signal du premier indicateur de régime (12) et lorsque, en même temps, la mémoire (13) est activée.

3. Dispositif selon la revendication 2 caractérisé en ce que le premier indicateur de régime (12) fournit un signal lorsque le régime de rotation du corps haute pression NHP est supérieur à 90% de son régime maximum.

4. Dispositif selon l'une quelconque des revendications 2 et 3 caractérisé en ce que le deuxième indicateur de régime (14) fournit un signal d'activation à la mémoire (13) lorsque le régime de rotation du corps haute pression NHP est inférieur à 80% de son régime maximum.

5. Dispositif selon l'une quelconque des revendications 2 à 4, caractérisé en ce que le temporisateur (9) actionne l'interrupteur (10) pendant un temps prédéterminé voisin de 150 secondes.

6. Dispositif selon l'une quelconque des revendications 1 à 5, caractérisé en ce que la loi programme du générateur de fonction (2) fournit une valeur de correction VC de la température de consigne T7 limitée à une valeur maximale de correction VCM.

7. Dispositif selon la revendication 6 caractérisé en ce que la valeur maximale de correction VCM est voisine de 15°C.

## Patentansprüche

1. Vorrichtung zum Kompensieren der Temperatur vor der Hochdruckturbine eines Zweiwellen-Flugzeug-Turbotriebwerks für die automatische und zeitweilige Vergrößerung des Schubs des Turbotriebwerks bei schlechten Flugbedingungen, insbesondere bei hoher Umgebungstemperatur TA und kaltem Motor, wobei das Turbotriebwerk durch ein Regelungssystem auf eine konstante Soll-Temperatur hinter der Niederdruckturbine geregelt wird,
**gekennzeichnet durch**
einen Funktionsgenerator (2), der Angaben über die Drehzahl NBP der Niederdruckturbine und über die Ist-Temperatur T7 am Ausgang der genannten Turbine aufnimmt und in Abhängigkeit von diesen Angaben und nach einem vorgegebenen Programmgesetz einen Korrekturwert VC der Soll-Temperatur liefert,
einen Addierer (5), der eine Angabe über der Wert der gegebenen Soll-Temperatur T7 aufnimmt und zur Aufnahme des genannten Korrekturwerts VC zeitweilig mit dem Funktionsgenerator (2) verbindbar ist, wobei er (5) den in Rechnung zu stellenden korrigierten Wert der Soll-Temperatur TC an das Regelungssystem liefert,
und Mittel (8), die in Abhängigkeit von den Betriebsbedingungen des Turbotriebwerks eine zeitweilige Verbindung des Funktionsgenerators (2) mit dem Addierer (5) ermöglichen.

2. Vorrichtung nach Anspruch 1,
**dadurch gekennzeichnet,**
daß die genannten Mittel (8), die eine zeitweilige Verbindung des Funktionsgenerators (2) mit dem Addierer (5) ermöglichen, folgende Teile umfassen:
- einen Schalter (10) zum Verbinden des Funktionsgenerators (2) mit dem Addierer (5),
- einen Zeitgeber (9), der die Betätigung des Schalters (10) während einer vorbestimmten Zeit ermöglicht,
- eine erste Anzeigevorrichtung (12) für die Drehzahl NHP des Hochdruckkörpers, die über eine Torschaltung ET (11) mit dem Zeitgeber (9) verbunden ist und ein Signal abgibt, wenn die Drehzahl NHP größer ist als ein vorbestimmter erster prozentualer Anteil der maximalen Drehzahl, und
eine zweite Anzeigevorrichtung (14) für die Drehzahl NHP des Hochdruckkörpers, die über einen Speicher (13) mit der genannten Torschaltung ET (11) verbunden ist und an diesen Speicher (13) ein Aktivierungssignal abgibt, wenn die Drehzahl NHP unter einen zweiten vorbestimmten prozentualen Anteil der maximalen Drehzahl liegt, wobei dieser zweite prozentuale Anteil kleiner ist als der erste prozentuale Anteil,
sowie **dadurch gekennzeichnet,**
daß der Speicher (13) derart mit dem Zeitgeber (9) verbunden ist, daß dieser bei seiner Sperrung den Speicher deaktiviert,
und daß die Torschaltung ET (11) an den Zeitgeber (9) ein Sperrsignal liefert, wenn er von der ersten Drehzahl-Anzeigevorrichtung (12) ein Signal empfängt und gleichzeitig der Speicher (13) aktiviert ist.

3. Vorrichtung nach Anspruch 2, dadurch gekennzeichnet, daß die erste Drehzahl-Anzeigevorrichtung (12) ein Signal liefert, wenn die Drehzahl NHP des Hochdruckkörpers größer ist 90% seiner maximalen Drehzahl.

4. Vorrichtung nach einem der Ansprüche 2 und 3, dadurch gekennzeichnet, daß die zweite Drehzahl-Anzeigevorrichtung (14) ein Aktivierungssignal an den Speicher (13) liefert, wenn die Drehzahl NHP des Hochdruckkörpers kleiner ist als 80% seiner maximalen Drehzahl.

5. Vorrichtung nach einem der Ansprüche 2 bis 4, dadurch gekennzeichnet, daß der Zeitgeber (9) den Schalter (10) während einer vorbestimmten Zeit von etwa 150 Sekunden betätigt.

6. Vorrichtung nach einem der Ansprüche 1 bis 5, dadurch gekennzeichnet, daß das Programmgesetz des Funktionsgenerators (2) einen Korrekturwert VC für die Soll-Temperatur T7 liefert, der auf einen maximalen Korrekturwert VCM begrenzt ist.

7. Vorrichtung nach Anspruch 6, dadurch gekennzeichnet, daß der maximale Korrekturwert VCM etwa 15°C beträgt.

## Claims

1. Compensator device for temperature in front of the high-pressure turbine of an aviation twin-spool turbine engine, intended automatically and temporarily to augment the thrust from the said turbine engine under poor flight conditions, especially at high ambient temperature TA and with a cold engine, the said turbine engine being regulated at constant datum temperature behind the low-pressure turbine by a regulation system, characterized in that it includes:
a function generator (2) receiving indications of the rotational speed NBP of the low-pressure turbine and of the effective temperature TE7 at the outlet from the said turbine and supplying a datum temperature correction value VC as a function of the said indications and according to a defined program law,
an adder (5) receiving an indication of the value of the given datum temperature T7 and capable of being linked temporarily to the said function generator (2) in order to receive the said correction value VC, the said adder (5) supplying the regulation system with the corrected value of the datum temperature TC to be taken into account, and
means (8) making it possible temporarily to link the said function generator (2) to the said adder (5) as a function of conditions of use of the said turbine engine.

2. Device according to Claim 1 characterized in that the said means (8) making it possible temporarily to link the said function generator (2) to the said adder (5) include:
a switch (10) making it possible to link the said function generator (2) to the said adder (5),
a timer (9) making it possible to actuate the said switch (10) for a predetermined time,
a first rotational speed indicator (12) for the high-pressure spool NHP linked to the said timer (9) by means of an AND gate (11) and supplying a signal when the said rotational speed NHP is higher than a first defined percentage of its maximum speed, and
a second rotational speed indicator (14) for the high-pressure spool NHP linked to the said AND gate (11) by means of a memory (13) and supplying the said memory (13) with an activation signal when the said rotational speed NHP is lower than a second defined percentage of its rotational speed, the said second percentage being lower than the said first percentage,
the said memory (13) being moreover linked to the said timer (9) so that the latter can de-activate it when it is triggered, and in that the said AND gate (11) supplies the timer (9) with a triggering signal when it receives a signal from the first speed indicator (12) and when, at the same time, the memory (13) is activated.

3. Device according to Claim 2 characterized in that the first speed indicator (12) supplies a signal when the rotational speed of the high-pressure spool NHP is higher than 90% of its maximum speed.

4. Device according to either of Claims 2 or 3 characterized in that the second speed indicator (14) supplies an activation signal to the memory (13) when the rotational speed of the high-pressure spool NHP is lower than 80% of its maximum speed.

5. Device according to any one of Claims 2 to 4, characterized in that the timer (9) actuates the switch (10) for a predetermined time close to 150 seconds.

6. Device according to any one of Claims 1 to 5, characterized in that the program law of the function generator (2) supplies a correction value (VC) for the datum temperature T7 which is limited to a maximum correction value VCM.

7. Device according to Claim 6 characterized in that the maximum correction value VCM is close to 15°C.
